# FASCICULE DE BREVET EUROPEEN

(11) **EP 0 826 489 B1**
(45) Date de publication et mention de la délivrance du brevet: **04.11.1998**
(21) Numéro de dépôt: 97440069.9
(22) Date de dépôt: 21.08.1997
(51) Int. Cl.: B32B 17/06, B32B 17/10, F24C 15/06

(54) **Procédé de réalisation d'un panneau décoratif d'appareil électro-ménager**
Verfahren zur Herstellung eines dekorierten Fassadenelements eines Haushaltselektrogeräts
Method for making the decorated facade panel of an electrical household appliance

(30) Priorité: 22.08.1996 FR 9610460
(43) Date de publication de la demande: 04.03.1998
(73) Titulaire: VTF INDUSTRIES, S.A.R.L., F-57870 Troisfontaines (FR)
(72) Inventeur: Epp, Bertrand, 67700 Saverne (FR); Chevrier, Laurent, 57870 Hartzviller (FR)
(74) Mandataire: Nuss, Pierre

(56) Documents cités:
- BE-A- 391 464
- DE-U- 9 310 235
- DE-U- 9 420 897
- FR-A- 2 658 166
- FR-A- 2 662 398
- GB-A- 2 153 744
- US-A- 5 049 433

## Description

La présente invention concerne le domaine des équipements électroménagers, en particulier des cuisinières, des fours, des lave-vaisselle, plans de cuissons et autres, munis sur leur façade d'un ou plusieurs panneaux verriers en verre trempé, formant bandeaux de commande ou éléments de porte ou plans de cuissons et a pour objet un procédé de réalisation d'un panneau décoratif d'appareil électroménager.

Les éléments verriers utilisés pour la réalisation de panneaux verriers de façade destinés à cet effet sont des pièces d'esthétique, qui sont souvent associées à des éléments en acier inoxydable brossé et qui ont pour but de donner un caractère d'esthétique industrielle à l'appareil. L'élément verrier est placé à l'arrière de l'élément en acier inoxydable et est visible grâce à des fenêtres, qui sont le plus souvent poinçonnées dans ledit élément. L'élément en acier inoxydable porte généralement en face avant une marque d'appareil imprimée par exemple par sérigraphie et qui est exposée aux abrasions.

Ce mode de réalisation nécessite des outils de poinçonnage des éléments en acier inoxydable pour découper des fenêtres pour le passage de la lumière des diodes luminescentes formant les témoins de fonctionnement, pendant le cycle d'un appareil. De plus, les éléments en acier inoxydable pour bandeaux de commandes sont percés de trous, également poinçonnés pour permettre le passage de boutons poussoirs ou boutons de commandes.

Par ailleurs, les éléments de porte en acier inoxydable peuvent être percés de trous de fixation pour poignées. Ces fenêtres et trous, qui sont des découpes dans le métal, sont obtenus au moyen d'un outil de découpe monté sur presse, ce qui nécessite un outillage de poinçonnage et une opération de découpe pour chaque configuration de bandeaux. En outre, les éléments en verre trempé sont percés avant trempe.

Le montage d'un élément vertier sur un élément en acier inoxydable doit être précis pour avoir une bonne superposition des trous des deux éléments verre/métal et permettre le passage des boutons de commande ou analogues. Ces éléments sont, le plus souvent, collés l'un à l'autre par un adhésif autocollant biface, qui présente, cependant, d'importants problèmes de positionnement, ou éventuellement par un produit adhésif déposé par sérigraphie du type adhésif permanent de dispersion à base d'acrylate. L'utilisation d'un tel adhésif est notamment décrite dans la demande de brevet français n° 96 04893 (FR-A-2 747 436).

Toutefois, un tel mode de réalisation d'ensemble verre/métal présente, outre le problème technique lié à la nécessité de découper le verre et l'acier séparément, du fait que l'acier inoxydable brossé est en face avant du verre, l'inconvénient que ledit acier inoxydable, très sensible aux chocs et rayures, peut être facilement détérioré, alors que le verre, en face arrière est moins sensible aux rayures.

On connaît également, par GB-A-2 153 744, un procédé de réalisation d'un panneau composite par collage d'une feuille transparente ou translucide sur un support décoré. Ce procédé ne permet, cependant, pas l'obtention d'une protection de la partie décorative contre des rayures ou des chocs.

Par ailleurs, US-A-5 049 433 décrit un panneau de verre de sécurité comportant une couche principale de verre sur laquelle est collée une feuille de matière synthétique destinée à en assurer la cohésion en cas de rupture de la couche de verre, suite à un impact ou autre.

Il est également connu, par DE-U-93 10 235, de réaliser un panneau ornemental comparable à un triple vitrage avec interposition d'un élément décoratif entre deux éléments de vitrage formant une protection de ce panneau. Un tel panneau n'est pas un panneau composite présentant une stratification de couches, dont l'une serait protégée par application sur une plaque de protection.

La présente invention a pour but de pallier ces inconvénients en proposant un procédé de réalisation d'un panneau décoratif d'appareil électroménager, tel que bandeau de commande ou élément de porte ou plan de cuisson, permettant l'obtention d'un panneau esthétique, rigide, résistant aux chocs et peu sensible aux rayures, la partie décorative étant recouverte par un élément transparent de protection.

Conformément à l'invention, ce procédé consiste à coller en face arrière d'une plaque de verre, au moyen d'une colle transparente appliquée à tous les endroits souhaités, un support décoratif métallique, par la face décorative de ce support, afin de protéger l'esthétique de ce support contre les chocs et les rayures ou autres agressions extérieures non réparables, sans nuire à l'esthétique de l'ensemble.

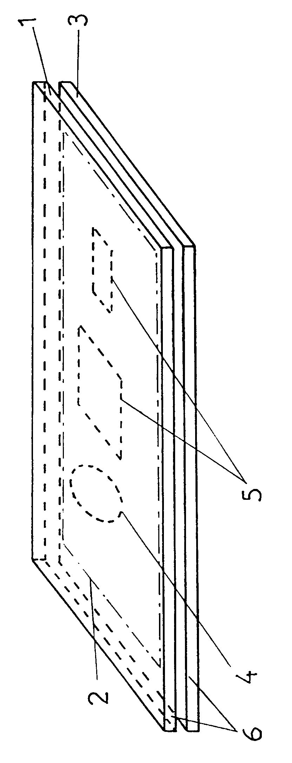

L'invention sera mieux comprise, grâce à la description ci-après, qui se rapporte à un mode de réalisation préféré, donné à titre d'exemple non limitatif, et expliqué avec référence au dessin schématique annexé, dont la figure unique est une vue en perspective d'une protection de façade décorative, obtenu par mise en oeuvre du procédé conforme à l'invention.

Comme le montre plus particulièrement, à titre d'exemple, la figure du dessin annexé, le procédé de réalisation d'un panneau décoratif, d'appareil électroménager, consiste à coller en face arrière d'une plaque de verre 1, au moyen d'une colle transparente 2 appliquée à tous les endroits souhaités, un support décoratif métallique 3, par la face décorative de ce support 3, afin de protéger l'esthétique de ce support 3 contre les chocs et les rayures ou autres agressions extérieures non réparables, sans nuire à l'esthétique de l'ensemble.

La plaque de verre 1 peut être constituée par un verre ordinaire non usiné, c'est-à-dire ni trempé, ni percé, ni façonné avant collage sur le support décoratif 3. En outre, ce support décoratif 3 n'est, avantageusement, pas non plus percé avant son collage sur la face arrière de la plaque en verre 1.

Selon une caractéristique de l'invention, la colle transparente 2 est préférentiellement appliquée sur la face arrière de la plaque de verre 1. Il est également possible de réaliser une application de la colle transparente 2 sur la face avant du support décoratif 3, éventuellement en combinaison avec une application sur la face arrière de la plaque de verre 1.

Selon une caractéristique de l'invention, l'ensemble collé est usiné après assemblage par collage de la plaque de verre 1 et du support décoratif 3, par perçage 4 et/ou façonnage d'autres évidements 5 et/ou façonnage des bords 6. Un tel usinage permet une réduction substantielle des coûts de fabrication, du fait qu'il est effectué simultanément sur la plaque de verre 1 et sur le support décoratif 3 collé en face arrière de cette plaque 1. En outre, cet usinage de l'ensemble collé peut être réalisé avec un outillage simple existant utilisé habituellement pour l'usinage du verre seul.

Cette réduction des coûts de fabrication et de l'outillage de découpe est obtenue, quelles que soient les variantes de fenêtres et trous dans un format donné.

La colle transparente 2 est avantageusement une colle du type résine mono-composant sans solvant , qui polymérise aux ultraviolets, telle que celle connue sous la dénomination commerciale VITRALIT 6127. Cette colle peut être déposée par sérigraphie, au pinceau ou au rouleau sur la face arrière de la plaque de verre 1 à tous les endroits souhaités et/ou sur la face avant du support décoratif. En outre, cette colle est avantageusement compatible avec les dilatations des matériaux collés montés sous forme d'un ensemble, en particulier sur un appareil électroménager, notamment de cuisson.

Du fait que la couche de colle transparente 2 est déposée par sérigraphie, au pinceau ou au rouleau, son positionnement peut être parfaitement précis, le ou les écrans utilisés à cet effet étant facilement réglables en position et pouvant présenter des découpes parfaitement adaptées aux besoins, c'est-à-dire aux contours des perçages 4 ou autres découpes 5 réalisées ultérieurement. Il en résulte que ladite couche 3 peut également remplir la fonction de joint d'étanchéité et remplacer avantageusement l'adhésif biface utilisé actuellement. En outre, ce mode de fixation permet une mise en place parfaitement précise, de manière fiable et répétitive.

Le support décoratif 3 sera avantageusement en un métal dont la surface a été traitée dans le but d'en améliorer l'esthétique, de préférence, en acier inoxydable brossé ou non. L'esthétique de l'ensemble collé obtenu est ainsi équivalente à celle du support décoratif 3 seul, l'avantage essentiel résidant dans le fait que le verre protège ledit support décoratif 3 contre toute dégradation, ce qui est particulièrement vrai pour les surfaces traitées dans le but d'une amélioration de l'esthétique, l'état de surface étant alors fragilisé, et notamment dans le cas d'un support décoratif 3 en acier inoxydable brossé. En effet, la plaque de verre 1 protège alors l'acier inoxydable brossé des rayures et chocs auxquels celui-ci est très sensible.

En outre, cette association verre et support métallique rigidifie l'ensemble collé, ce qui le rend plus résistant aux chocs, de sorte que l'épaisseur de la plaque de verre 1 peut être réduite, ce qui entraîne une réduction correspondante du coût et du poids de l'ensemble.

Conformément à une autre caractéristique de l'invention, non représentée au dessin annexé, le support décoratif 3 peut être pourvu d'un décor gravé, dessiné ou imprimé, notamment par sérigraphie. Du fait du montage de la plaque de verre 1 sur ledit support décoratif 3, ce décor ne pourra pas être détériorée par choc ou rayure.

Selon une autre caractéristique de l'invention, la plaque de verre 1 peut également être pourvue d'un décor par sérigraphie. Une impression par sérigraphie sur les deux parties constitutives de l'ensemble collé permet l'obtention d'effets optiques grâce à un positionnement judicieux du décor sérigraphié par rapport au décor du support décoratif.

Par ailleurs, une telle impression sur les deux parties peut permettre de cacher certaines zones du support décoratif 3, qui peuvent alors être utilisées pour le montage du panneau composite sur un appareil. Ainsi, à titre d'exemple, une sérigraphie sur verre peut permettre de cacher des équerres de fixation faisant partie du support décoratif 3. Ce support décoratif 3 peut également être formé de façon à intégrer les moyens nécessaires à la fixation de l'ensemble collé sur un appareil sans élément intermédiaire, tels que des équerres, des glissières, des clips, qui sont généralement rapportés à cet effet.

Dans le cas d'utilisation de l'ensemble collé conforme à l'invention sous forme d'un complexe verre et métal, en particulier acier inoxydable, l'élément métallique à l'arrière du verre permet, pour un verre monté sur une porte de cuisinière ou four de cuisson de servir d'écran thermique ou de radiateur de répartition de la chaleur et, de ce fait, de réduire la température de surface à l'extérieur de la porte de l'appareil de cuisson.

Grâce à l'invention, il est possible de réaliser un ensemble collé permettant l'obtention d'un panneau esthétique, rigide, résistant aux chocs et peu sensible aux rayures, en associant, par collage avec une colle transparente, un verre à un support décoratif métallique, ce dernier étant collé en face arrière et non plus en face avant du verre.

## Revendications

1. Procédé de réalisation d'un panneau décoratif d'appareil électroménager, tel que bandeau de commande ou élément de porte ou plan de cuisson, caractérisé en ce qu'il consiste à coller en face arrière d'une plaque de verre (1), au moyen d'une colle transparente (2) appliquée à tous les endroits souhaités, un support décoratif métallique (3), par la face décorative de ce support (3), afin de protéger l'esthétique de ce support (3) contre les chocs et les rayures ou autres agressions extérieures non réparables, sans nuire à l'esthétique de l'ensemble.

2. Procédé, suivant la revendication 1, caractérisé en ce que la colle transparente (2) est du type résine mono-composant sans solvant, qui polymérise aux ultraviolets et est compatible avec les dilatations des matériaux collés montés sous forme d'un ensemble.

3. Procédé suivant la revendication 2, caractérisé en ce que la colle transparente (2) est connue sous la dénomination commerciale VITRALIT 6127.

4. Procédé, suivant l'une quelconque des revendications 1 et 2, caractérisé en ce que la colle transparente (2) est appliquée sur la face arrière de la plaque de verre (1).

5. Procédé, suivant l'une quelconque des revendications 1 et 2, caractérisé en ce que la colle transparente (2) est appliquée sur la face avant du support décoratif métallique (3), éventuellement en combinaison avec une application sur la face arrière de la plaque de verre (1).

6. Procédé, suivant la revendication 1, caractérisé en ce que l'ensemble collé est usiné après assemblage par collage de la plaque de verre (1) et du support décoratif métallique (3).

7. Procédé, suivant l'une quelconque des revendications 1 à 5, caractérisé en ce que la colle est déposée au pinceau, au rouleau ou par sérigraphie.

8. Procédé, suivant l'une quelconque des revendications 1, 5 et 6, caractérisé en ce que le support décoratif métallique (3) est constitué en un métal traité dans le but d'en améliorer l'esthétique.

9. Procédé, suivant l'une quelconque des revendications 1, 5, 6 et 8 à 9, caractérisé en ce que le support décoratif métallique (3) est constitué en acier inoxydable brossé ou non.

10. Procédé, suivant l'une quelconque des revendications 1, 5, 6, 8 et 9, caractérisé en ce que le support décoratif métallique (3) est pourvu d'un décor gravé, dessiné ou imprimé.

11. Procédé, suivant l'une quelconque des revendications 1 et 4 à 6, caractérisé en ce que la plaque de verre (1) est pourvue d'un décor par sérigraphie permettant des effets optiques grâce au positionnement judicieux de celui-ci par rapport au décor du support décoratif métallique (3).

## Claims

1. Method for producing a decorative panel for a domestic electric appliance, such as a control fascia or door element or cooking surface, characterised in that it consists of sticking to the rear face of a glass plate (1), by means of a transparent glue (2) applied to all the desired places, a metallic decorative support (3), by means of the decorative face of this support (3), in order to protect the aesthetic appearance of this support (3) against impact and scratches or other irreparable external attacks, without impairing the aesthetic appearance of the whole.

2. Method according to Claim 1, characterised in that the transparent glue (2) is of the solvent-free single-component resin type, which polymerises under ultraviolet and is compatible with the expansions of the glued materials mounted in the form of an assembly.

3. Method according to Claim 2, characterised in that the transparent glue (2) is known by the trade name VITRALIT 6127.

4. Method according to either one of Claims 1 and 2, characterised in that the transparent glue (2) is applied to the rear face of the glass plate (1).

5. Method according to either one of Claims 1 and 2, characterised in that the transparent glue (2) is applied to the front face of the metallic decorative support (3), optionally in combination with an application to the rear face of the glass plate (1).

6. Method according to Claim 1, characterised in that the glued assembly is worked after assembling by gluing the glass plate (1) and the metallic decorative support (3).

7. Method according to any one of Claims 1 to 5, characterised in that the glue is deposited with a brush or roller or by screen printing.

8. Method according to any one of Claims 1, 5 and 6, characterised in that the metallic decorative support (3) consists of a metal treated for the purpose of improving its aesthetic appearance.

9. Method according to any one of Claims 1, 5, 6 and 8 to 9, characterised in that the metallic decorative support (3) is formed from stainless steel, brushed or not.

10. Method according to any one of Claims 1, 5, 6, 8 and 9, characterised in that the metallic decorative support (3) is provided with an etched, drawn or printed decoration.

11. Method according to any one of Claims 1 and 4 to 6, characterised in that the glass plate (1) is provided with a screen-printed decoration affording optical effects by virtue of the careful positioning thereof with respect to the decoration on the metallic decorative support (3).

## Patentansprüche

1. Verfahren zur Herstellung eines dekorierten Fassadenelements eines Haushaltselektrogeräts, wie beispielsweise für ein Bedienungsteil, ein Türelement oder eine Kochplatte, dadurch gekennzeichnet, daß die Rückseite einer Glasplatte (1) mittels eines transparenten Klebstoffs (2) gegebenenfalls stellenweise mit einem dekorierten Metallträger (3) auf der dekorierten Seite des Trägers (3) zum Schutz des Aussehens des Trägers (3) gegen nicht reparable Schlag- und Kratzeinwirkung und zur Vermeidung einer Beeinträchtigung des Aussehens des Aggregats verbunden wird.

2. Verfahren nach Anspruch 1, dadurch gekennzeichnet, daß ein transparenter Klebstoff (2) auf der Grundlage eines einfachen Harzes ohne Lösungsmittel verwendet wird, der unter ultraviolettem Licht auspolymerisiert und mit Klebstoffen anderer Zusammensetzung verträglich ist, mit denen er einen Komplex bildet.

3. Verfahren nach Anspruch 2, dadurch gekennzeichnet, daß ein transparenter Klebstoff (2), bekannt unter dem Handelsnamen VITRALIT 6127, verwendet wird.

4. Verfahren nach einem der Ansprüche 1 und 2, dadurch gekennzeichnet, daß der transparente Klebstoff (2) auf der Rückseite der Glasplatte (1) aufgebracht wird.

5. Verfahren nach einem der Ansprüche 1 und 2, dadurch gekennzeichnet, daß der transparente Klebstoff (2) auf der Vorderseite des dekorierten Metallträgers (3), gegebenenfalls in Verbindung mit einer Auftragung auf der Rückseite der Glasplatte (1) aufgebracht wird.

6. Verfahren nach Anspruch 1, gekennzeichnet durch das gemeinsame Verkleben durch Zusammenfügung der Glasplatte (1) mit dem Klebstoff mit dem dekorierten Metallträger (3).

7. Verfahren nach einem der Ansprüche 1 bis 5, dadurch gekennzeichnet, daß der Klebstoff mittels eines Pinsels, einer Rolle oder eines Siebdruckverfahrens aufgetragen wird.

8. Verfahren nach einem der Ansprüche 1, 5 und 6, dadurch gekennzeichnet, daß der dekorierte Metallträger (3) aus ansprechend veredeltem Metall hergestellt wird.

9. Verfahren nach einem der Ansprüche 1, 5, 6 und 8 bis 9, dadurch gekennzeichnet, daß der dekorierte Metallträger (3) aus gebürstetem oder ungebürstetem Edelstahl besteht.

10. Verfahren nach einem der Ansprüche 1, 5, 6, 8 und 9, dadurch gekennzeichnet, daß der dekorierte Metallträger (3) mit einer Gravur, einer Beschriftung oder einem Aufdruck ausgestattet ist.

11. Verfahren nach einem der Ansprüche 1 und 4 bis 6, dadurch gekennzeichnet, daß die Glasplatte (1) zur optisch sinnvollen Kennzeichnung mit Siebdruck versehen wird, der mit dem Aufdruck auf dem dekorierten Metallträger (3) in funktionalem Zusammenhang steht.
